Europäisches Patentamt

European Patent Office

Office européen des brevets

(11) Publication number: **0 432 944 A1**

## (12) EUROPEAN PATENT APPLICATION

(21) Application number: 90313039.1

(51) Int. Cl.5: **C04B 35/54**

(22) Date of filing: 30.11.90

(30) Priority: **07.12.89 US 447473**

(43) Date of publication of application:
**19.06.91 Bulletin 91/25**

(84) Designated Contracting States:
**DE FR GB IT NL**

(71) Applicant: **GENERAL ELECTRIC COMPANY**
**1 River Road**
**Schenectady, NY 12345(US)**

(72) Inventor: **Mulvey, Robert Farrell**
**3 Treemont Drive**
**Pennsylvania 19355(US)**

(74) Representative: **Smith, Thomas Ian Macdonald**
**et al**
**London Patent Operation G.E. Technical**
**Services Co. Inc. Burdett House 15-16**
**Buckingham Street**
**London WC2N 6DU(GB)**

(54) **Expanded pyrolytic graphite; process for making expanded pyrolytic graphite; and insulation produced therefrom.**

(57) A process for making lightweight, malleable, high temperature pyrolytic graphite material having uniform AB plane spacing from a dense pyrolytic graphite material by first heating the dense pyrolytic graphite material to a temperature of at least about 2900° C. Thereafter, the pyrolytic graphite material is heated with an intecalating agent at an elevated temperature; the intercalating agent preferably is washed from the treated pyrolytic graphite material; and the (washed) pyrolytic graphite material is heated at a temperature of about 700° C to about 1100° C for a sufficient time to form an expanded pyrolytic graphite material. The product is a stable, low density, non-friable, compressible, heat-graphitized pyrolytic graphite expanded by intercalation in the c direction of the AB plane spacing with remarkable uniformity and has excellent insulation characteristics. It is malleable, or may be rigidized.

FIG.1
GRAPHITIZED PYROLYTIC GRAPHITE CRYSTAL STRUCTURE

EP 0 432 944 A1

## EXPANDED PYROLYTIC GRAPHITE; PROCESS FOR MAKING EXPANDED PYROLYTIC GRAPHITE; AND INSULATION PRODUCED THEREFROM

This invention relates to a process for treating pyrolytic graphite and the product obtained therefrom, and more particularly, to a process for preparing an expanded graphitized pyrolytic graphite of low density and the light weight insulation capable of withstanding high temperatures produced thereby.

Pyrolytic carbon is well-known in the art and is generally a dense, non-porous graphite which is stronger and more resistant to heat and corrosion than ordinary graphite. Pyrolytic graphite can maintain its strength at about 3300°c. One example of pyrolytic carbon structures is found in U.S. latent No. 3,547,676 which is incorporated herein by reference in its entirety. In U.S. Patent No. 3,547,676, pyrolytic carbon structures are prepared by chemical vapor deposition from a mixture of methane and inert gas at a temperature of about 1600°C to about 2400°C.

Another type of pyrolytic graphite is a reflective pyrolytic graphite which is described in U.S. Patent No. 4,761,308 which is incorporated herein by reference in its entirety. In U.S. Patent No. 4,761,308, reflective pyrolytic graphite is generally prepared by preparing a surface nucleated pyrolytic graphite by a chemical vapor deposition technique. The chemical vapor deposition is carried out by the decomposition of low molecular weight hydrocarbon gases at a temperature of about 1700° - 2200°C. The deposited pyrolytic graphite is annealed at temperatures in excess of about 2600°C and pressures in excess of about 5 torr. Details are specified in U.S. Patent No. 4,761,308 for the preparation of the reflective pyrolytic graphite from pyrolytic graphite deposited on a suitable support, such as, for example, conventional graphite, tungsten metal or hafnium metal. Although the reflecting pyrolytic graphite of U.S. Patent No. 4,761,308 is an excellent reflecting material and may possess multiple layers, the planar configuration of which can be arranged perpendicular to heat flow to promote insulating properties, the reflecting pyrolytic graphite of U.S. Patent No. 4,761,308 is too dense to be a good high temperature thermal insulator.

In U.S. Patent No. 3,389,964, low density graphite structures are prepared by compressing vermicular graphite into a compact having a density of at least 0.64g/cc treating such compact with an intercalating agent and heating the treated compact to a temperature of between about 100°C and about 500°C to produce an integral, unitary graphite structure having a density of between about 0.08 and 0.4 g/cc. Structures prepared by the process of U.S. Patent No. 3,389,964, which is incorporated by reference herein in its entirety, have essentially laminar void areas; they are deformable; and under slight pressure they may have a degree of resiliency as well as possessing the characteristics of resistance to high temperature and high temperature oxidation usually possessed by compressed vermicular graphite.

In U.S. Patent No. 3,414,381, which is incorporated by reference herein in its entirety, low density graphite structures are prepared by re-expanding compressed vermicular graphite compacts to form light weight, integral graphite structures by treating vermicular graphite with an expanding agent such as $Br_2$, $SO_3$, $N_2O_4$, $CrO_2Cl_2$ and $FeCl_3$ and the like in the fluid form and compressing such treated graphite to form a compact of the desired shape and density. The compact thus formed is re-expanded at ambient temperature to 25 times or more its original volume by contacting such compact with hydrogen peroxide or other inorganic peroxide or organic peroxide.

Acid treatment of graphite particles by immersion in a strongly oxidizing solution, such as, for example, fuming sulfuric acid, concentrated sulfuric acid, nitric acid, fuming nitric acid, concentrated nitric acid, a mixture of concentrated sulfuric acid and concentrated nitric acid, a mixture of concentrated sulfuric acid and nitric acid, an aqueous potassium chlorate solution, a mixture of concentrated nitric acid and potassium chlorate, an aqueous potassium permanganate solution, an aqueous potassium chromate solution, an aqueous potassium dichromate solution, phosphoric acid, a mixture of phosphoric acid and dichromic acid, or a mixture of sulfuric acid and potassium dichromate, at room temperature to 200°C for 10 minutes to 20 hours is described in U.S. Patent No. 4,146,401 which is incorporated by reference herein in its entirety. The process of U.S. Patent No. 4,146,401 is used to produce a graphite material having compressibility and recovering property. According to U.S. Patent No. 4,400,433, the prior art processes generally consisted of treating graphite particles with an acid to form graphite intercalation compounds, rapidly heating the graphite intercalation compounds at a high temperature to obtain vermiform expanded graphite masses which are expanded in the c axis direction (the direction perpendicular to the layers of graphite), and compressing the expanded graphite masses in the presence or absence of a binder to produce a sheet or block-shaped graphite product. The vermiform expanded graphite masses employed in U.S. Patent No. 4,400,433, are those obtained by treating particles of natural graphite, Kish graphite or a synthetic graphite, such as pyrolytic graphite, with a strongly oxidative acid solution such as fuming sulfuric acid, fuming nitric acid, a mixed acid of concentrated sulfuric acid and concentrated nitric acid, and the like.

Various forms of graphite are treated with intercalating agents, and the graphite is thereafter expanded by heating in U.S. Patent No. 3,389,073, U.S. Patent No. 1,191,383 and U.S. Patent No. 1,137,373, all of which are incorporated herein by reference in their entirety.

Although various forms of expanded graphite masses have been prepared in the prior art, including vermiform expanded graphite masses from pyrolytic graphite with a strongly oxidative acid solution, it is desirable to improve the integrity and the insulating properties of materials prepared from pyrolytic graphite, especially reflecting pyrolytic graphite. It is also desirable to improve the acid exfoliation processes used in treating pyrolytic graphite to achieve improved pyrolytic graphite products. It is also desirable to improve the uniformity of spacing in the AB direction of the crystalline structure of pyrolytic graphite in order to achieve improved thermal insulation of the pyrolytic graphite in the c direction, especially in reflecting pyrolytic graphite.

Accordingly, it is an object of the present invention to provide an improved process for treating pyrolytic graphite to make improved, expanded pyrolytic graphite useful, for instance, as an improved insulation product.

Thus by the processes disclosed herein there can be prepared a lightweight pyrolytic graphite material capable of withstanding high temperatures and having uniform AB plane spacing, which material may be rigid or malleable. There may also be prepared an improved reflecting pyrolytic graphite high temperature thermal insulator having a low density.

In one aspect of the invention, a process for treating pyrolytic graphite includes heating the pyrolytic graphite at a temperature sufficient to form graphitized pyrolytic graphite; treating the graphitized pyrolytic graphite with an intercalating agent at a temperature sufficient to form intercalated graphitized pyrolytic graphite; and heating the intercalated graphitized pyrolytic graphite at a temperature sufficient to expand the intercalated graphitized pyrolytic graphite to form a malleable, graphitized pyrolytic graphite having reduced density. The malleable, expanded, graphitized pyrolytic graphite having reduced density formed by the process of the present invention is a non-friable, compressible insulation material. It is characterized by a uniform AB plane spacing which acts as an insulation at temperatures up to 2500°C or higher, the heat traveling very readily in the direction of the AB plane and very poorly in the c direction perpendicular to the AB plane. Generally, the density of the expanded pyrolytic graphite prepared by the process of the present invention is less than 0.8g/cc, and preferably, between about 0.016 and 0.24g/cc.

Critical to the process is the graphitization of the pyrolytic graphite and the formation of an expanded graphitized pyrolytic graphite. The graphitization is achieved by pre-heating the pyrolytic graphite at a temperature sufficient to form a graphitized pyrolytic graphite prior to treating the pyrolytic graphite with an intercalating agent. It is the graphitization which produces the uniform AB plane spacing in the expanded pyrolytic graphite and thereby contributes to the integrity of the expanded, non-friable, malleable, high temperature-pyrolytic material having excellent insulating characteristics.

In accordance with another aspect of the invention, there is provided a malleable expanded pyrolytic graphite produced by a process comprising, heating the pyrolytic graphite at a temperature sufficient to form graphitized pyrolytic graphite; treating the graphitized pyrolytic graphite with an intercalating agent at a temperature sufficient to form intercalated graphitized pyrolytic graphite; and heating the intercalated graphitized pyrolytic graphite at a temperature sufficient to expand the intercalated graphitized pyrolytic graphite, thereby forming expanded, graphitized pyrolytic graphite. The product is a stable, low density, non-friable, malleable, compressible, heat-graphitized pyrolytic graphite uniformly expanded by intercalation in the c direction of the AB plane spacing.

When the process starts with a reflecting pyrolytic graphite treated by the process of the present invention, the high temperature insulation material not only acts as an insulation, but also has a highly reflective surface with multilayer reflecting surfaces, each layer having the reflecting characteristics as described in U.S. Patent No. 4,761,308. In this embodiment, a substantial amount of the thermal energy is transferred by reflectance due to the multilayer reflecting characteristics of the insulation. As used herein to describe and claim the present invention pyrolytic graphite includes reflective pyrolytic graphite.

In other aspects of the present invention, the compressible, non-friable expanded pyrolytic graphite material can be strengthened or rigidized by infiltration with pyrolytic carbon or overcoating with pyrolytic graphite. As used herein, the pyrolytic carbon-infiltrated or -overcoated expanded pyrolytic carbon is rigid, that is, it is less malleable or completely rigidized (non-bendable). The

Other aspects, features and advantages of the invention will be apparent from the following detailed description of the invention and the accompanying drawings, in which:

FIGURE 1 shows an idealized graphite crystal structure of an expanded, graphitized pyrolytic graphite produced according to an embodiment of the invention;

FIGURE 2 is a thermal conductivity comparison chart showing the thermal conductivities of expanded, reflective pyrolytic graphite insulation materials so produced compared with the prior art reflecting graphite and various other materials;

FIGURE 3 is a graphical representation of the thermal conductivity of expanded, graphitized reflective graphite materials at various temperatures;

FIGURE 4 is a photograph of a perspective view of a cored cylinder of low density, expanded, graphitized reflective pyrolytic graphite produced according to an embodiment of the invention;

FIGURE 5 is a photograph of a side view of a cored cylinder of low density, expanded, graphitized reflecting pyrolytic graphite so produced.

The process of the present invention can be used with any multi-layered pyrolytic graphite which has been deposited on a substrate, including the reflective pyrolytic graphite of U.S. Patent No. 4,761,308.

As used herein, pyrolytic graphite means any pyrolytic graphite which has been deposited in the form of layers or consists of layers of pyrolytic graphite and includes the layered, reflective pyrolytic graphite of U.S. Patent No. 4,761,308.

Since the reflective pyrolytic graphite of U.S. Patent No. 4,761,308 comprises a large number of layers of pyrolytic graphite deposited on a substrate from decomposing hydrocarbon gas, when the reflective pyrolytic graphite is subjected to the expansion process of the present invention, it creates a large number of reflecting interlayers in the expanded reflective pyrolytic graphite. The plurality of reflecting interlayers causes excellent reflection of energy back to the original source. In effect, the expanded layers of pyrolytic graphite create more interrupters resulting in better insulation and better reflectance. By the process of the present invention, the bonds which hold the layers of pyrolytic carbon together in the c direction, break or weaken and cause separation of the layers, thereby expanding the material. There is an unexpectedly uniform AB plane spacing in the crystalline structure of the expanded, graphitized pyrolitic graphite.

The process of the present invention can be carried out on any configuration including pyrolytic graphite in the form of sheet material, rings, pipes, round rods, angular rods, articles having a semicircular shape or a U-shaped cross-section or any other form of molded or shaped pyrolytic graphite. When any article of pyrolytic graphite, including reflective pyrolytic graphite, is subjected to the process of the present invention, expanded, graphitized pyrolytic graphite, which also includes herein expanded, graphitized reflective pyrolytic graphite, having improved insulating properties is formed. The expanded, graphitized pyrolytic graphite of the present invention retains its integrity, is non-friable, and unless it is further rigidized, is malleable, compressible, and has a tensile strength which is only slightly reduced from the non-expanded pyrolytic graphite. In the non-rigidized form, the malleable expanded graphitized pyrolytic graphite can be easily shaped into any desired configuration.

In performing the present invention, pyrolytic graphite is first heated at an elevated temperature sufficient to graphitize the pyrolytic graphite, that is, to form graphitized pyrolytic graphite. This step is critical in the process of the present invention, and it must be carried out before the pyrolytic graphite is treated with an intercalating agent. It is critical in the process of the present invention that graphitized pyrolytic graphite be formed prior to treatment with the intercalating agent in order to produce the uniform AB plane spacing and to maintain the integrity of the final products of the present invention. If this critical pre-heating step is omitted, the AB plane spacing is non-uniform, and the final product crumbles and flakes and generally has little or no product integrity, that is, it rapidly disintegrates or deteriorates to the form of flakes, particulate material and/or powder.

To form the graphitized pyrolytic graphite, the pyrolytic graphite must be heated at a temperature, preferably of at least about 2900°C for an amount of time sufficient to completely convert the pyrolytic graphite to graphitized pyrolytic graphite. Generally, at a temperature of about 2900°C to about 3000°C, the pyrolytic graphite can be graphitized in about 10 to about 30 minutes, depending upon the size and bulk of the product being heated. There is no upper temperature limit or time limit at which the pyrolytic graphite can be heated to form the graphitized pyrolytic graphite, however, there is generally no advantage to be gained in the process of the present invention by heating the pyrolytic graphite at temperatures in excess of 4000°C for prolonged periods of time. In this critical step, all that is important is that the pyrolytic graphite be heated at a sufficient temperature and for a sufficient amount of time to convert the pyrolytic graphite substantially to graphitized pyrolytic graphite. The heating can be carried out in any suitable oven or furnace capable of achieving the desired temperature.

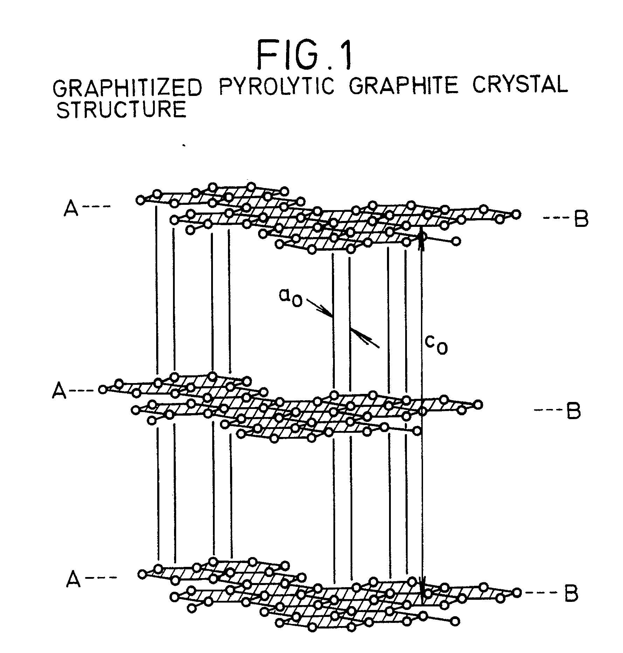

After the graphitized pyrolytic graphite is formed by the critical heating step, it can then be treated with an intercalating agent as well-known in the art. Any intercalating agent known in the art which will cause exfoliation or separation of the layers of graphitized pyrolytic graphite, that is, which will spread or extend the layers of graphitized pyrolytic graphite in the c direction as shown in Figure 1, may be used in the process of the present invention.

Pyrolytic graphite is generally deposited in the form of layers or sheets which are weakly bonded to each other. The intercalation of the pyrolytic graphite with an intercalating agent partially separates the layers with intercalating agent (intercalant) which diffuses in between the AB planes of the pyrolytic graphite crystalline structure along with various reaction products thereof and/or decomposition products thereof. For example, when the intercalating agent is a mixture of concentrated sulfuric acid and concentrated nitric acid, generally such products as carbon sulfite, carbon nitrite and various other products are formed along with various gases, all of which contribute to the separation of the layers of pyrolytic graphite.

The particular intercalating agent, temperature and length of time of treatment with the intercalating agent are not critical in the process of the present invention, and one skilled in the art can easily adjust the various parameters from the teachings of the prior art including the references incorporated herein by reference. The particular intercalating agent may be any agent which will promote the subsequent separation of the layers of pyrolytic graphite, however, in preferred embodiments, the intercalating agent is a strong oxidizing agent, such as a solution of about 90% by volume sulfuric acid and about 10% by volume nitric acid, the mixture being diluted with about 10% by volume water. Organic acids as well as inorganic acids can be used as intercalating agents in the process of the present invention. Examples of intercalating agents include fuming nitric acid, fuming sulfuric acid, mixtures of concentrated nitric and concentrated sulfuric acids, perhalo acids and the like as described in U.S. Patent No. 3,389,073 which is incorporated herein by reference in its entirety; bromine and ferric chloride and the like as discussed in U.S. Patent No. 3,389,964 which is incorporated herein by reference in its entirety; nitric acid and chlorate of potash, preferably four parts of nitric acid to one part of the chlorate, as disclosed in U.S. Patent Nos. 1,191,383 and 1,137,373, both of which are incorporated by reference herein in their entirety; and the organic acid intercalants of U.S. Patent No. 4,608,192 which is incorporated by reference herein in its entirety, and which includes such organic acids as 7,7,8,8-tetracyanoquinomethane (TCNQ), tetracyanoethylene (TCNE), 1,2-dicyanobenzene, 1,4-dicyanobenzene, dicyanoethylene, diphenylacetylene, tetrachloroethylene and 1,2,4,5-tetracyanobenzene (TCNB), as well as other intercalants.

Although treatment conditions vary widely with the particular type of intercalating agent used to treat the graphitized pyrolytic graphite in accordance with the process of the present invention, generally, the graphitized pyrolytic graphite is treated with the intercalating agent at a sufficient temperature for a sufficient amount of time to form intercalated graphitized pyrolytic graphite, that is, until the intercalating agent has completely penetrated the graphitized pyrolytic graphite and formed reactants therein. One skilled in the art can easily adjust the reaction conditions, such as temperature and length of time of treatment with the intercalating agent in view of the abundance of prior art generally relating to the intercalation of conventional graphite. However, in accordance with the preferred embodiments of the present invention, the greater the quantity of intercalating agent introduced into the pyrolytic graphite, the greater will be the expansion upon subsequent heating. The amount of intercalating agent is not critical as long as there is a sufficient amount to penetrate the graphitized pyrolytic graphite and provide the degree of expansion desired upon subsequent heating. There is no upper limit in the amount of intercalating agent which may be used in the present process, however, in most embodiments of the present invention, there is a sufficient amount to saturate completely the graphitized pyrolytic graphite with the intercalating agent. Normally, this is achieved by immersing the graphitized pyrolytic graphite in the intercalating agent.

Essentially complete penetration of the sample of graphitized pyrolytic graphite is usually required, and penetration depends on the original density of the graphitized pyrolytic graphite and the thickness and size of the sample of graphitized pyrolytic graphite. Suitable penetration by the intercalating agent is usually achieved by soaking the graphitized pyrolytic graphite in the agent for a period of from about 2 to about 30 minutes for a sample of graphitized pyrolytic graphite having a density up to about 1.6g/cc and a thickness of about 6.35mm. The rate of penetration may be increased by heating the intercalating agent at a temperature sufficient to form intercalated graphitized pyrolytic graphite, generally up to about 100°C, and in certain instances, at temperature ranging from about 100°C to about 180°C or higher. Generally, there is no upper limit in the temperature at which the intercalating agent may be heated except the decomposition temperature of the intercalating agent. The graphitized pyrolytic graphite is treated with intercalating agent at an elevated temperature to speed up the intercalation of the graphitized pyrolytic graphite. For gaseous intercalating agents, more rapid penetration of the graphitized pyrolytic graphite is achieved by increasing the pressure under which such agent is applied to the graphitized pyrolytic graphite. In one preferred embodiment of the present invention, the graphitized pyrolytic graphite is immersed in a 10% by volume aqueous solution of about 10% by volume concentrated nitric and 90% by volume concentrated sulfuric acids and heated at a temperature of about 65° C (150° F) for about 30 minutes.

After intercalation, that is, after the graphitized pyrolytic graphite is treated with the intercalating agent to form an intercalated graphitized pyrolytic graphite, optionally, the treated pyrolytic graphite may then be washed or purged free of excess intercalating agent. Any solvent for the intercalating agent may be used to wash the excess intercalating agent from the intercalated graphitized pyrolytic graphite as long as it does not attack the intercalated graphitized pyrolytic graphite and as long as it removes the excess intercalating agent and any reaction products from the treated graphite. Generally water is the most desirable washing agent to remove intercalating agents. In those cases where the intercalating agent is gaseous, excess gas can optionally be removed by purging the sample with air, nitrogen or other suitable non-reactive gas.

After intercalation, or after the optional step of removing the excess intercalating agent from the intercalated graphitized pyrolytic graphite, the intercalated graphitized pyrolytic graphite is heated at a temperature sufficient to expand the intercalated graphitized pyrolytic graphite to form the expanded pyrolytic graphite of the present invention. The treated graphite may be heated by any suitable means, such as in an oven or furnace, to a temperature of between about 100° C and about 1100° C, and more preferably, between about 700° C to about 1100° C until the expansion of the graphitized pyrolytic graphite is complete. Such heating causes the intercalated graphitized pyrolytic graphite to expand in volume as much as 30 times or more to produce an expanded, graphitized pyrolytic graphite structure having a relatively low density and a low thermal conductivity yet having good physical integrity making it suitable as an insulation for many high temperature applications.

The length of time that the graphitized pyrolytic graphite is heated subsequent to the expansion step is not critical. The intercalated graphitized pyrolytic graphite is heated for a sufficient length of time to achieve the expanded pyrolytic graphite material of the present invention, and it is within the purview of one skilled in the art to determine a sufficient time to form the expanded, graphitized pyrolytic graphite at the elevated temperatures. The length of time is dependent upon the temperature at which the intercalated graphitized pyrolytic graphite is heated as well as the size and/or bulk of the sample of pyrolytic graphite being expanded by the process of the present invention to form an insulating material. By controlling the temperature and the length of time the intercalated graphitized pyrolytic graphite is heated at an elevated temperature, the expansion of the intercalated graphitized pyrolytic graphite may be controlled, thereby controlling the density of the expanded pyrolytic graphite. One skilled in the art can easily observe the amount of expansion of the product and reduce the temperature and/or control the length of time the graphite material is subjected to a given temperature or temperature range to provide an expanded pyrolytic graphite of a predetermined dimension. Generally, expansion is completed within about 10 minutes to about 2 hours.

In those cases where the graphitized pyrolytic graphite has been washed with water or other solvent to remove excess intercalating agent and various reaction products, the heat applied to expand the graphitized pyrolytic graphite also dries the graphitized pyrolytic graphite. In those cases where the washing step is omitted, the heat applied to expand the graphitized pyrolytic graphite also removes the excess intercalating agent by evaporation. Optionally, the expanded graphitized pyrolytic graphite can be washed with water or other solvent and dried after the expansion step.

As described above, one of the preferred pyrolytic graphites which may be expanded in accordance with the process of the present invention is the reflective pyrolytic graphite described in US Patent No. 4,761,308, the disclosure in which is incorporated herein by reference. In an expanded, graphitized reflective pyrolytic graphite which has been expanded in accordance with an embodiment of the invention, the insulating properties are not only achieved because of the exfoliation of the laminae or layers of graphitized pyrolytic graphite but also because of the reflective nature of each of the layers within the graphite structure. Thus, each layer in the reflective pyrolytic graphite as illustrated in the drawing shown in Figure 1, provides a reflective surface for the reflection of energy as well as the space between each layer to prevent thermal conductivity. The expanded, graphitized reflective pyrolytic graphite is an excellent insulator not only because of the uniform spatial relationship of the respective layers of the graphitized pyrolytic graphite but also because of the reflective nature of each of the graphitized pyrolytic graphite layers.

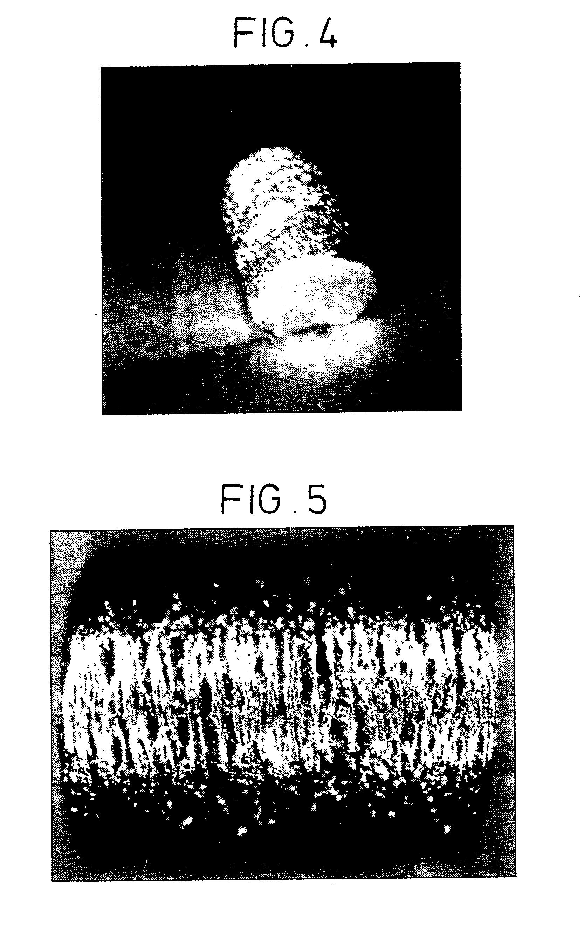

An expanded graphitized pyrolytic graphite can be formed by the process of the invention which is an excellent insulation material, is non-friable, is easily compressible, is lightweight and has a low density. Such expanded, graphitized pyrolytic graphite generally can have a density lower than about 0.8 g/cc and can have a density of 0.02g/cc or lower while still retaining its non-friable, compressible, malleable characteristics. In essence, the reduction in density has been achieved by separating the layers of graphite crystals deposited in the AB plane, thus producing a vertical growth in the material in the c direction as shown in Figure 1 which is an idealized crystal structure. The layers are clearly visible in the cored cylinder of low density graphite shown in the photographs in Figures 4 and 5, illustrative of the expansion in the "c" direction in the idealized crystal structure of Figure 1.

Because the multi-layered low density expanded, graphitized pyrolytic graphite of the present invention is quite pliable, it can be easily shaped to conform to almost any surface and can be applied thereto as an ultra-high temperature thermal insulation. To illustrate the reduction in density characteristic of the expanded graphitized pyrolytic graphite of the present invention, a dense reflective pyrolytic graphite prepared in accordance with the process of US Patent No. 4,761,308 having a density of about 2.1g/cc was converted to a low density expanded graphitized reflective pyrolytic graphite by the process of the present invention wherein the expanded, graphitized reflective pyrolytic graphite had a density of only about 0.02g/cc without any compromise in the highly reflective properties of the pyrolytic graphite. In fact, an examination of the photographs of Figures 4 and 5 clearly shows the reflective nature of the expanded, graphitized reflective pyrolytic graphite prepared by the process of the present invention.

Because the expanded graphitized pyrolytic graphite prepared by the process of the present invention, including expanded graphitized reflective pyrolytic graphite, is malleable, yet non-friable, the material can be supplied in sheet form; or it can be employed as a coating; or it can be used as a coating/impregnant on carbon cloths or felts and the like.

In certain instances, it may be desirable to reduce the malleability of the expanded graphitized pyrolytic graphite prepared by the process of the present invention to improve the handleability of the material, or it may be desirable to provide rigidized articles or sheets or other configurations including packing rings, pipes, including heat pipes, round rods or angular rods or articles having semi-circular or U-shaped cross-sections or any other configuration from the expanded graphitized pyrolytic of the present invention. This may be achieved by molding the malleable, expanded graphitized pyrolytic graphite so that it conforms to any of the desired shapes and thereafter treating the material to rigidize the expanded, graphitized pyrolytic graphite structure. The graphite structure of malleable planar sheets of the expanded graphitized pyrolytic graphite made by the process of the present invention can also be rigidized without significantly changing the density of the expanded graphitized pyrolytic graphite material. This can be achieved by either pyrolytic carbon infiltration of the expanded graphitized pyrolytic graphite or it can be achieved by a pyrolytic graphite overcoating of the expanded graphitized pyrolytic graphite.

In one embodiment of the present invention, pyrolytic carbon is infiltrated into the expanded graphitized pyrolytic graphite by depositing carbon by the chemical vapor deposition technique from a short chain hydrocarbon at a temperature of about 1000°C to about 2250°C and a pressure of about 1 *to about 6 torr for a sufficient amount of time to permit the carbon to infiltrate the expanded, graphitized pyrolytic graphite. The infiltration process is described, for example, in U.S. Patent No. 4,761,308 where a sample is positioned in a furnace, and the furnace is evacuated to a pressure of about 1 mm, and thereafter the furnace is heated to a temperature of about 700°C to about 1000°C, preferably about 900°C, at a rate of about 300°C per hour. When the desired temperature is reached, hydrogen gas is passed through the furnace at a rate of about 15 standard cubic feet per hour. At a temperature of about 900°C to about 1200°C, preferably about 1100°C, methane or other short chain hydrocarbon gas is fed into the furnace at the rate of about 15 standard cubic feet per hour. After the temperature has stabilized at about 900°C to about 1200°C, preferably about 1090°C to about 1100°C, the pressure in the furnace is adjusted to about 2 torr. These conditions are maintained for about 24 hours. At the end of this time, the methane flow is discontinued, and the furnace temperature is increased to about 2100°C to about 2150°C at a rate of about 200°C per hour. When this temperature is reached, the hydrogen flow is discontinued, and methane is passed into the furnace at a rate of about 30 - 40, preferably about 36, standard cubic feet per hour, and the furnace pressure is adjusted to about 3.5 to about 5 torr. These conditions are maintained until the desired infiltration is achieved. Naturally, it is within the purview of one skilled in the art to vary these conditions, and the foregoing is merely exemplary of one of may processes available to those skilled in the art for infiltrating or impregnat-

* 1 Torr = 1 mm mercury (to close approximation)

ing porous or expanded structures with pyrolytic carbon. In certain preferred embodiments, the expanded, graphitized pyrolytic graphite is heated at about 1000°C to about 1100°C in the presence of methane and a hydrogen gas carrier at a pressure of about 6 torr. By following the foregoing process, a rigidized, graphitized pyrolytic graphite insulation is formed. By the foregoing infiltration process, the exterior of the graphitized pyrolytic graphite insulation is darkened, and the emissivity of the insulation is increased. The higher emissivity improves the heat rejection capabilities of the insulation and enhances the radiator performance of the insulating material.

To improve the handleability or to rigidize the expanded graphitized pyrolytic graphite prepared by the process of the present invention, an overcoating of pyrolytic graphite may be applied to the surface of the expanded graphitized pyrolytic graphite.

The pyrolytic graphite coating is applied to the outside of the expanded graphitized pyrolytic graphite after it has been very lightly rubbed. For example, any technique which folds over the ends of the AB planes and creates a continuous silver-like surface on the expanded graphitized pyrolytic graphite, may be used to achieve the pyrolytic graphite overcoating. The rubbing may be carried out with any flat surface, by hand, with a cloth or a device similar to a glass rod or even a flat wooden stick similar to a tongue depressor. Physical evidence that the ends of the AB planes have been folded over by the rubbing action is evidenced by the appearance of the shiny, silver-like surface on the expanded graphitized pyrolytic graphite. It is this surface, which has been rubbed to produce a shiny surface, to which the pyrolytic graphite is applied. The pyrolytic graphite overcoat creates a hard exterior which not only rigidizes the expanded graphitized pyrolytic graphite, but also creates a surface which can be more easily bonded to other components of the system while creating a rigid structural integrity with minimum weight pickup. The deposition of the overcoat rigidizes the expanded graphitized pyrolytic graphite without significantly changing the density. The coating can be applied in any thickness from about 0.025 mm to about 12.7 mm in thickness or greater. Insulating materials have been fabricated with coating thicknesses ranging from about 0.075 mm to about 0.5 mm.

Generally, the overcoating is applied by rubbing the surface of the expanded, graphitized pyrolytic graphite to form a silver-like surface, and pyrolytic graphite is prepared by depositing carbon by the chemical vapor deposition technique on the silver-like surface from a short chain hydrocarbon at a temperature of about 1000°C to about 2250°C and a pressure of about 1 to about 6 torr until the silver-like surface is coated with the desired thickness of pyrolytic graphite. The preparation of pyrolytic graphite and deposition thereof on the surface is conventional and well-known in the art and is described in various references including U.S. Patent No. 4,761,308 and U.S. Patent No. 3,547,676. In preferred embodiments, the expanded graphitized pyrolytic graphite is heated to about 1000°C to about 1100°C, and the carbon is deposited by the chemical vapor deposition technique from methane in a hydrogen gas carrier in a furnace operated at about 6 torr. This process results in a rigid graphitized pyrolytic graphite insulation, the properties of which have been described above.

In preferred embodiments of the present invention, there is provided a process for producing light weight, malleable, high temperature pyrolytic graphite material having uniform AB plane spacing from a dense pyrolytic graphite material comprising the steps of, heating the dense pyrolytic material to a temperature of at least about 2900°C; treating the heated dense pyrolytic graphite material with an intercalating agent at an elevated temperature; removing the intercalating agent from the treated pyrolytic graphite material; and heating the washed pyrolytic graphite material at a temperature of about 700°C to about 1100°C for a sufficient time to form an expanded pyrolytic graphite material which is suitable as an insulation and which has been graphitized by heating the dense pyrolytic material to the temperature of at least about 2900°C prior to treating it with the intercalating agent. In the most preferred embodiment of the process of the present invention, the intercalating agent is a mixture of concentrated nitric and concentrated sulfuric acid in a ratio of 10% by volume nitric acid to 90% by volume sulfuric acid, the mixture being in the form of an aqueous solution containing 10% by volume water. In this embodiment, the dense pyrolytic graphite is immersed in the acid solution and heated from about 100°C to about 180°C. The dense pyrolytic graphite material is preferably a reflective pyrolytic graphite, and accordingly, the graphitized expanded product is an expanded, graphitized reflective pyrolytic graphite material. As described above, in certain embodiments the expanded graphitized pyrolytic graphite material can be rigidized to improve handleability either by infiltration of the expanded material with carbon by a chemical vapor deposition technique or by overcoating the rubbed expanded material having a silver-like surface with a pyrolytic graphite coating by a chemical vapor deposition technique.

There follow specific examples of novel expanded graphitized pyrolytic graphite and ways of making it in accordance with embodiments of the invention. They are intended for illustrative purposes only and should not be construed as a limitation.

Sheets of reflective pyrolytic graphite were made on a graphite support as described in Example I of U.S. Patent No. 4,761,308, the disclosure in which is incorporated herein by reference. Samples of the reflecting (reflective) graphite were heated at a temperature of about $300^{\circ}$ C in a furnace for about 30 minutes until the reflecting pyrolytic graphite was completely graphitized. After the graphitized samples were removed from the furnace and cooled, they were immersed in a 10% (by volume) aqueous solution of 10% (by volume) concentrated nitric acid and 90% (by volume) concentrated sulfuric acid. The samples were heated in the acid solution at a temperature of about $65^{\circ}$ C ($150^{\circ}$ F) for about 30 minutes until the hot acid solution had completely permeated the pyrolytic graphite. The samples of pyrolytic graphite were removed from the acid and washed in water to remove excess acid. The washed samples of pyrolytic graphite were placed in an oven at atmospheric pressure at a temperature of about $1100^{\circ}$ C.

The resulting expanded reflecting pyrolytic graphite material had a very uniform cell structure and weighed 0.02g/cc. The majority of the expansion occurred in the oven maintained at the elevated temperature. The initial density of the dense pyrolytic graphite prior to treatment was about 2.1g/cc. The density of the samples after the acid treatment but prior to heating in the oven to expand the samples was from about 0.37g/cc to about 0.8g/cc. By the process of the present invention, up to 99% voids were introduced into the dense reflective pyrolytic graphite in the formation of the expanded, low density graphitized reflective pyrolytic graphite.

As previously noted, the graphitization of the pyrolytic graphite prior to intercalation unexpectedly resulted in uniform AB spacing in the expanded graphitized pyrolytic graphite. This was achieved by heating the pyrolytic graphite at a temperature of about $3000^{\circ}$ C prior to the acid treatment. In the illustration of Figure I, showing an idealized crystal structure, the expanded AB planes of the pyrolytic graphite prepared by the process of the present invention are shown in a separated configuration to illustrate the expanded pyrolytic graphite prepared by the process of the present invention. By x-ray diffraction studies, the dimensions of the unit cell of expanded, graphitized pyrolytic graphite are $a_0 = b_0 = 2.461$ angstrom units and $c_0 = 6.708$ angstrom units. * Thus, in a 25.4 mm thickness of the expanded, graphitized pyrolytic graphite prepared by the process of the present invention, there are approximately 37 million of the AB planes in the graphite structure. Heat travels very readily across the AB plane and very poorly perpendicular to the AB plane, that is, very poorly in the c direction.

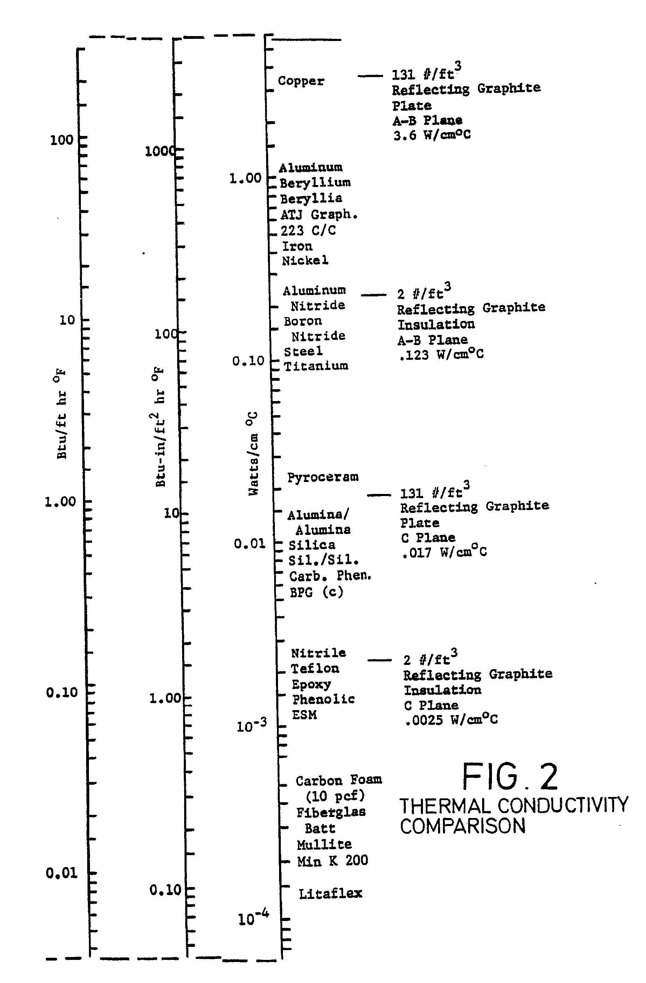

Thermal conductivity tests were conducted on the expanded graphitized pyrolytic graphite samples of the present invention, and the thermal conductivity of the samples was compared with the thermal conductivity of various conventional materials including non-expanded reflecting graphite plate. The comparative study is shown in the chart in Figure 2 where a sample of expanded, graphitized, reflective pyrolytic graphite insulation having a density of 2 lbs/ft³ (0.03g/cc) was compared with non-expanded reflective graphite plate having a density of 131 lbs/ft³ (2.1g/cc) as well as various other materials including steel. The data in the thermal conductivity chart of Figure 2 shows that for a 2 lbs./ft.³ sample of the expanded insulation prepared by the process of the present invention, heat crosses the AB planes 50 times as well as it does in the c direction. In the form tested, the 2 lbs./ft.³ insulation conducts in the AB plane better than a 517 lbs/ft³ (8.33g/cc) steel. Thus, if a long piece of the expanded graphitized, reflective pyrolytic graphite prepared by the process of the present invention wherein the AB planes run the length of the article or insulation, are overcoated with pyrolytic graphite, a heat pipe would be formed which in an inert atmosphere could operate from $3000^{\circ}$ C to about $-150^{\circ}$ C. Thus, the expanded, rigidized pyrolytic graphite prepared by the process of the present invention can be used either as a heat rejection system or a heat absorption system.

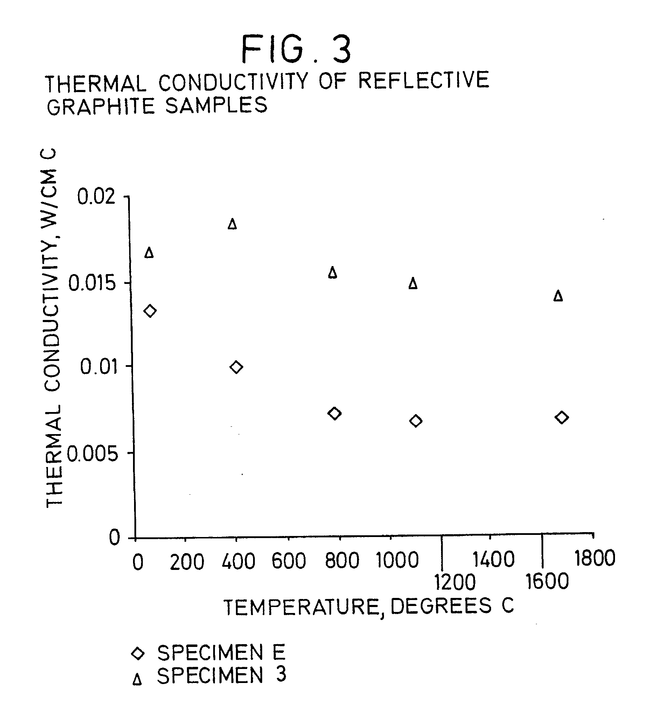

Figure 3 shows the thermal conductivity of expanded, graphitized reflective pyrolytic graphite samples prepared as discussed above but having a density of 11.1 lbs/ft³ (0.18g/cc) (sample E) and a density of 21.5 lbs/ft³ (0.34g/cc) (sample 3). Sample 3 had also been vacuum expanded and collapsed from 16.7 lbs/ft³ to 21.5 lbs/ft³ (0.27g/cc to 0.34g/cc).

Figures 4 and 5 show a perspective view and a side view respectively, of the expanded, low density, graphitized reflecting pyrolytic graphite of the present invention. The photograph is of a sample of the material having a diameter of 0.5 inch (1.25 cm) and a length of 0.625 inch (1.56 cm). The density of the sample was 1.3 lbs./ft.³ (0.02 g./c.c.). The sample had greater than 99% voids.

Tests conducted on the expanded graphitized pyrolytic graphite materials of the present invention

---

* 1 angstrom unit = $10^{-10}$ m

show that even when the material is expanded 100%, the tensile strength remains within acceptable limits and the material remains non-friable. In this form, the material is very malleable and can be shaped or compressed very readily. It has also been observed that during the expansion process of the present invention, the height of the material grows but there is substantially no length or width dimensional changes.

While the invention has been described in detail with reference to certain specific embodiments, various changes and modifications which fall within the scope of the invention will become apparent to those skilled in the art.

## Claims

1. A process for making expanded pyrolytic graphite comprising:
   (a) heating the pyrolytic graphite at a temperature sufficient to form graphitized pyrolytic graphite;
   (b) treating the graphitized pyrolytic graphite with an intercalating agent at a temperature sufficient to form intercalated graphitized pyrolytic graphite; and
   (c) heating the intercalated graphitized pyrolytic graphite at a temperature sufficient to expand the intercalated graphitized pyrolytic graphite, thereby forming expanded, graphitized pyrolytic graphite.

2. The process of Claim 1 further comprising removing the intercalating agent from the intercalated graphitized pyrolytic graphite by washing the graphite with a solvent therefor.

3. The process of Claim 1 wherein the pyrolytic graphite is heated at a temperature of at least about 2,900°C to form graphitized pyrolytic graphite.

4. The process of Claim 1 wherein the intercalating agent is an oxidizing agent.

5. The process of Claim 4 wherein the oxidizing agent is a mixture of concentrated nitric and sulfuric acids.

6. The process of Claim 5 wherein the mixture is heated at a temperature of about 100°C to about 180°C.

7. The process of Claim 1 wherein the intercalated graphitized pyrolytic graphite is heated at a temperature or about 700°C to about 1100°C. to expand the intercalated graphitized pyrolytic graphite.

8. The process of Claim 1 further comprising infiltrating the expanded graphitized pyrolytic graphite with pyrolytic carbon.

9. The process of Claim 8 wherein pyrolytic carbon is infiltrated into the expanded intercalated graphitized pyrolytic graphite by depositing carbon by the chemical vapor deposition technique from a short chain hydrocarbon at a temperature of about 1000°C to about 2250°C and a pressure of about 1 to about 6 torr for a sufficient amount of time to permit the carbon to infiltrate the expanded, intercalated, graphitized pyrolytic graphite.

10. The process of Claim 9 wherein the expanded, intercalated, graphitized pyrolytic graphite is heated at about 1000°C to about 1100°C in the presence of methane and a hydrogen gas carrier at a pressure of about 6 torr.

11. The process of Claim 1 further comprising rubbing the surface of the expanded, intercalated, graphitized pyrolytic graphite to form a silver-like surface; preparing pyrolytic graphite by depositing carbon by the chemical vapor deposition technique on the silver-like surface from a short chain hydrocarbon at a temperature of about 1000°C to about 2250°C and a pressure of about 1 to about 6 torr until the silver-like surface is coated with pyrolytic graphite.

12. The process of Claim 11 wherein the expanded, intercalated, graphitized pyrolytic graphite is heated to about 1000°C to about 1100°C and the carbon is deposited by the chemical vapor deposition technique from methane in a hydrogen gas carrier in a furnace operated at about 6 torr.

13. The process of Claim 11 wherein pyrolytic graphite is deposited on the surface of the expanded, intercalated graphitized pyrolytic graphite at a thickness of about 1 mil to about 0.5 inch.

14. A process for producing an improved light weight, malleable, high temperature pyrolytic graphite material having uniform AB plane spacing from a dense pyrolytic graphite material comprising the steps of:
    (a) heating the dense pyrolytic graphite material to a temperature of at least about 2900°C;
    (b) treating the heated dense pyrolytic graphite material with an intercalating agent at an elevated temperature;

(c) removing the intercalating agent from the treated pyrolytic graphite material; and

(d) heating the pyrolytic graphite material at a temperature of about 700°C to about 1100°C for a sufficient time to form an expanded pyrolytic graphite material.

15. The process of Claim 14, wherein the intercalating agent is a mixture of concentrated nitric acid and concentrated sulfuric acid.

16. The process of Claim 15 wherein the mixture comprises about 10% by volume concentrated nitric acid and about 90% by volume concentrated sulfuric acid.

17. The process of Claim 16 wherein the mixture is about a 5% by volume to about a 20% by volume solution in water.

18. The process of Claim 15 wherein the mixture of concentrated nitric acid and concentrated sulfuric acid is heated from about 100°C to about 180°C.

19. The process of Claim 15 wherein the intercalating agent is removed by washing with water.

20. The process of Claim 15 wherein the dense pyrolytic graphite material is a reflecting pyrolytic graphite.

21. The process of Claim 14 further comprising rubbing the surface of the expanded pyrolytic graphite material to create a silver-like surface and applying a pyrolytic graphite coating to the silver-like surface to produce a rigidized, expanded pyrolytic graphite.

22. The process of Claim 14 further comprising infiltrating the expanded pyrolytic graphite with carbon by a chemical vapor deposition technique to form a rigidized expanded pyrolytic graphite.

23. Expanded pyrolytic graphite material or body produced by the process of any preceding claim.

# FIG .1
## GRAPHITIZED PYROLYTIC GRAPHITE CRYSTAL STRUCTURE

FIG. 2
THERMAL CONDUCTIVITY
COMPARISON

FIG. 3

THERMAL CONDUCTIVITY OF REFLECTIVE
GRAPHITE SAMPLES

◇ SPECIMEN E
△ SPECIMEN 3

## FIG.4

## FIG.5

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | US-A-3 885 007  (L.C. OLSEN et al.)<br>* Claims 1,4-8; column 1, lines 48-64; example 1 *<br>– – – | 1-7,14-19 | C 04 B<br>35/54 |
| Y | | 8-13,<br>20-23 | |
| Y,D | US-A-4 761 308  (J.J. GEBHARDT et al.)<br>* Claims 1-4,11 *<br>– – – – – | 8-13,<br>20-23 | |

TECHNICAL FIELDS
SEARCHED (Int. Cl.5)

C 04 B 35/00
C 23 C 16/00

The present search report has been drawn up for all claims

| Place of search | Date of completion of search | Examiner |
|---|---|---|
| The Hague | 07 March 91 | HAUCK, H.N. |

CATEGORY OF CITED DOCUMENTS

X : particularly relevant if taken alone
Y : particularly relevant if combined with another
document of the same catagory
A : technological background
O : non-written disclosure
P : intermediate document
T : theory or principle underlying the invention

E : earlier patent document, but published on, or after
the filing date
D : document cited in the application
L : document cited for other reasons

&: member of the same patent family, corresponding
document